## Europäisches Patentamt
## European Patent Office
## Office européen des brevets

(19)

(11) Veröffentlichungsnummer: **0 258 461**
A1

(12)

# EUROPÄISCHE PATENTANMELDUNG
Veröffentlicht nach Art. 158 Abs. 3 EPÜ

(21) Anmeldenummer: 87901773.9

(22) Anmeldetag: 05.02.87

(51) Int. Cl.³: **G 11 B 7/00**
G 11 B 7/24, G 11 C 13/04

Daten der zugrundeliegenden internationalen Anmeldung:

(86) Internationale Anmeldenummer:
PCT/SU87/00021

(87) Internationale Veröffentlichungsnummer:
WO87/04843 (13.08.87 87/18)

(30) Priorität: 07.02.86 SU 3134542
07.02.86 SU 3136659

(43) Veröffentlichungstag der Anmeldung:
09.03.88 Patentblatt 88/10

(84) Benannte Vertragsstaaten:
AT BE CH DE FR GB IT LI LU NL SE

(71) Anmelder: INSTITUT PROBLEM MODELIROVANIA V ENERGETIKE AKADEMII NAUK UKRAINSKOI SSR
pr. Pobedy, 56
Kiev, 252680(SU)

(72) Erfinder: PETROV, Vyacheslav Vasilievich
ul. Montazhnikov, 104
Kiev, 252069(SU)

(72) Erfinder: GORSHKOV, Nikolai Vasilievich
Leninsky pr., 52-416
Moscow, 117333(SU)

(72) Erfinder: ANTONOV, Alexandr Alexandrovich
pr. Vernadskogo, 85-64
Kiev, 252142(SU)

(72) Erfinder: KRJUCHIN, Andrei Andreevich
ul. Juliusa Fuchika, 8-13
Kiev, 252049(SU)

(72) Erfinder: TOKAR, Alexandr Petrovich
pr. Korneichuka, 30-161
Kiev, 252205(SU)

(72) Erfinder: SHANOILO, Semen Mikhailovich
ul. A.Malyshko, 15-27
Kiev, 252206(SU)

(72) Erfinder: GRINKO, Dmitry Alexandrovich
ul. Akademika Dobrokhotova, 4-71
Kiev, 252142(SU)

(72) Erfinder: SERGIENKO, Tatyana Ivanovna
ul. Akademika Tupoleva, 7-111
Kiev, 252128(SU)

(72) Erfinder: JUDIN, Gennady Jurievich
ul. Geroev Stalingrada, 15-70
Kiev, 252210(SU)

(72) Erfinder: ANTONOV, Evgeny Evgenievich
ul. Nekrasovskaya, 98-20
Kiev, 252053(SU)

(72) Erfinder: POPOVICH, Vladislav Ivanovich
pr. Vernadskogo, 67-78
Kiev, 252142(SU)

(74) Vertreter: Lehn, Werner, Dipl.-Ing. et al,
Hoffmann, Eitle & Partner Patentanwälte Arabellastrasse 4
D-8000 München 81(DE)

(54) OPTISCHER INFORMATIONSTRÄGER, METHODE UND OPTISCHE SPEICHERVORRICHTUNG ZUM LÖSCHEN VON INFORMATION DARIN.

(57) Optischer Informationsträger enthält einen Zylinder (1) mit einer Aufzeichnungsschicht (2) in seinem Inneren sowie Hülsen (3, 4) an den Stirnenden des Zylinders (1), die die Aufzeichnungsschicht (2) gegen die Umgebung isolieren. Löschverfahren für eine auf dem genannten optischen Träger aufgezeichnete Information, darin bestehend, dass im geschlossenen hermetisch abgedichteten Hohlraum (5) des Zylinders (1) eine elektrische Hochfrequenzentladung erregt wird.

Optischer Speicher für die Durchführung dieses Verfahrens weist eine Einheit (11) zur Informationslöschung auf, die eine Erregerschaltung für eine Hochfrequenzentladung mit Elektroden (12, 13) enthält, zwischen denen der optische Speicher (10) in der Weise angeordnet ist, dass die Hochfrequenzentladung in dessen geschlossenem hermetisch abgedichtetem Hohlraum (5) erregt wird.

FIG.1

OPTISCHER INFORMATIONSTRÄGER, INFORMATIONSLÖSCHVERFAH-
REN FÜR DIESEN UND OPTISCHER SPEICHER ZUR DURCHFÜHRUNG
DIESES VERFAHRENS

## Technisches Gebiet

Die Erfindung bezieht sich auf Mittel zur Informationsspeicherung und -verarbeitung und betrifft insbesondere optische Informationsträger, Informationslöschverfahren für diese und optische Speicher zur Durchführung
dieses Verfahrens.

## Zugrundeliegender Stand der Technik

Es ist ein optischer Informationsspeicher bekannt,
der zwei Platten enthält, die koaxial in der Weise angeordnet sind, dass es zwischen ihnen einen Raum gibt, der
durch zwei koaxiale Trennstücke unter Ausbildung eines
geschlossenen Raumes zwischen den Platten begrenzt ist.
Auf einer der gegenüberliegenden Oberflächen liegt eine
Aufzeichnungsschicht, die sich innerhalb des geschlossenen Raumes (s. GB, B, 1580398) befindet.

Es ist auch ein optischer Informationsträger bekannt,
der einen Hohlzylinder, eine auf die Aussenfläche aufgetragene Aufzeichnungsschicht und einen zweiten Zylinder
enthält, der den ersten Zylinder umgibt. Zwischen ihnen
liegen zwei elastische Dichtungselemente, die einen an
einer Aufzeichnungsschicht anliegenden zylindrischen geschlossenen Raum (s. GB, B, 1580398) bilden.

Die Verbindung zwischen den Platten und den Abstandsringen oder zwischen den Zylindern hat dank der Verwendung eines Adhäsionseigenschaften besitzenden Materials
einen provisorischen Charakter, was für die einen Zugang
zum Aufzeichnungsmaterial fordernde Entwicklung der Information nach deren Registrierung auf der Aufzeichnungsschicht notwendig ist.

Der bekannte optische Informationsträger bietet keinen vollen Schutz der Aufzeichnungsschicht gegen äussere
Verschutzungen, denn sein Innenraum ist hermetisch abgedichtet. Deshalb werden z.B. bei alltäglichen zyklischen

-2-

Umgebungstemperaturmessungen in den Innenraum samt der Luft Staub und Feuchtigkeit eingesaugt, die die Oberfläche der Aufzeichnungsschicht verunreinigen. Ein weiterer Nachteil des bekannten optischen Informationsträgers ist das Fehlen der Möglichkeit einer mehrfachen Überschreibung der Information auf diesem wegen der Verschmutzung der Oberfläche der Aufzeichnungsschicht.

Es sind optische Speicher bekannt, die einen optischen Informationsträger in Form einer Platte enthalten, die ein Substrat und eine Aufzeichnungsschicht besitzt, auf der mittels Lichtstrahlen eine Information (FR, B, 2482756) aufgespeichert wird.

Dort ist auch ein Informationslöschverfahren bekannt, darin bestehend, dass die Abschnitte mit der Aufzeichnung durch einen Lichtstrahl derart belichtet werden, dass sie in den Zustand mit ursprünglichen optischen Eigenschaften rückverwandelt werden, wobei die Belichtung des Trägers eine Änderung des Kristallisationsgrades der Aufzeichnungsschicht hervorruft.

Die Information auf derartigem Träger wird durch eine zufällige Beleuchtung, beispielsweise durch Sonnenstrahlung oder Erhitzung, leicht beschädigt.

Das Löschverfahren nimmt wegen der Notwendigkeit mehr Zeit in Anspruch, den Träger langsam zu erwärmen und dann die vorgegebene Temperatur genau einzuhalten.

Dieses Verfahren ist daher wenig produktiv uns sichert die erforderliche Zuverlässigkeit einer wiederholten Aufzeichnung nicht, weil sich bei der wiederholten Aufzeichnung und Löschung die Struktur der Aufzeichnungsschicht verschlechtert und deren Dicke ungleichmässig wird. Dies verringert die Zykluszahl bei der Überschreibung sprunghaft.

Es ist auch ein optischer Speicher bekannt, der einen optischen Informationsträger, eine Einheit zur Aufzeichnung und/oder der Ablesung der Information und eine Einheit zu deren Löschung sowie eine Steuereinheit für die Umschaltung der Betriebsarten der Informationsaufzeichnung , -ablesung und -löschung (s. US, A, 4403318) aufweist.

Es ist auch ein Löschverfahren für eine auf einem optischen Informationsträger aufgezeichnete Information bekannt, darin bestehend, dass der Träger einer äusseren Einwirkung unterzogen wird, die die aufgezeichnete Information löscht, es werden beispielweise zwei oder mehr Lichtstrahlen erzeugt, auf den Träger fokussiert, und die Aufzeichnungsschicht des Informationsträgers wird durch sie in der Weise abgetastet, dass die Abschnitte dieser Schicht mit unterschiedlichem Grad erwärmt werden. Dies wird durch Änderung der Strahlungsenergiedichte aufgrund einer Änderung der Strahlungsintensität oder Fleckgrösse (s. US, A. 4403318) erreicht.

Diese bekannten Lösungen lassen keine mehrfache Benutzung der Informationsträger aus den gleichen Grunden zu, die vorstehend erwähnt worden sind.

Offenbarung der Erfindung

Der Erfindung liegt die Aufgabe zugrunde, einen optischen Informationsträger, ein Informationslöschverfahren für diesen und einen optischen Speicher für eine mehrfache Durchführung des Verfahrens zu schaffen, die es gestatten, nach der Löschung eine wiederholte Informationsaufzeichnung auf dem gleichen optischen Informationsträger mehrfach vorzunehmen.

Diese Aufgabe wird dadurch gelöst, dass in dem optischen Informationsträger, der einen Hohlzylinder, eine mit dem Hohlzylinder in Verbindung stehende und zur Aufzeichnung von Informationen vorgesehene Aufzeichnungsschicht und zwei Hülsen enthält, die je stirnseitig des Hohlzylinders angeordnet sind und einen geschlossenen Hohlraum in diesem bilden, gemäss der Erfindung der geschlossene Hohlraum hermetisch abgedichtet ausgeführt und die innerhalb des geschlossenen hermetisch abgedichteten Hohlraumes liegende Aufzeichnungsschicht von der Umgebung isoliert ist.

Es ist zweckmässig, dass der geschlossene hermetisch

-4-

abgedichtete Hohlraum mit einem Gas gefüllt ist, das gegenüber den Materialien der Aufzeichnungsschicht und des Hohlzylinders inert ist.

Der optische Informationsträger kann einen innerhalb des ersten Hohlzylinders koaxial zu diesem angeordneten zweiten Hohlzylinder aufweisen, der eine auf dessen Aussenfläche liegende und der Aufzeichnungsschicht des ersten Zylinders zugewandte Aufzeichnungsschicht besitzt, während die Hülsen ringförmig ausgeführt werden und einen geschlossenen hermetisch abgedichteten Hohlraum zwischen den Zylindern bilden können.

Diese Aufgabe wird auch dadurch gelöst, dass in dem Löschverfahren für eine auf einem Informationsträger aufgezeichnete Information, darin bestehend, dass der optische Informationsträger einer die aufgezeichnete Information löschenden äusseren Einwirkung ausgesetzt wird, gemäss der Erfindung als äussere Einwirkung ein elektrisches Feld benutzt wird, das eine Hochfrequenzentladung im geschlossenen hermetisch abgedichteten Hohlraum des optischen Informationsträgers ermöglicht.

Erwünscht ist, dass der optische Informationsträger um die eigene Achse rotiert.

Die Aufgabe wird auch dadurch gelöst, dass in dem optischen Speicher, der einen optischen Informationsträger mit einer Aufzeichnungsschicht, eine Einheit zur Informationsaufzeichnung und -ablesung sowie eine Einheit zur Informationslöschung enthält, gemäss der Erfindung die Einheit zur Informationslöschung eine über mindestens zwei Elektroden verfügende Erregerschaltung für eine Hochfrequenzentladung aufweist und der optische Informationsträger, dessen geschlossener hermetisch abgedichteter Hohlraum mit einem gegenüber den Materialien der Aufzeichnungsschicht und des Hohlzylinders inerten Gas gefüllt ist, zwischen den Elektroden derart angeordnet ist, dass die Hochfrequenzentladung in dessen geschlossenem hermetisch abgedichtetem Hohlraum erregt wird.

Es ist zweckmässig jede Elektrode der Erregerschaltung für eine Hochfrequenzentladung in der Weise anzuordnet, dass ein Teil der zum zylindrischen optischen Informationsträger koaxialen Oberfläche gebildet wird.

Zweckmässig ist es auch, dass eine Elektrode der Erregerschaltung für eine Hochfrequenzentladung innerhalb des geschlossenen hermetisch abgedichteten Hohlraumes des Hohlzylinders und die übrigen Elektroden ausserhalb des Hohlzylinders angeordnet sind.

Enthält der optische Informationsträger zwei koaxiale Hohlzylinder mit einem geschlossenen hermetisch abgedichteten Hohlraum zwischen ihnen, kann im optischen Speicher eine Elektrode der Erregerschaltung für eine Hochfrequenzentladung im Hohlraum des zweiten Hohlzylinders liegen, während die übrigen Elektroden ausserhalb des ersten Hohlzylinders angeordnet werden können.

Der erfindungsgemässe optische Informationsträger kann mehrfach verwendet werden, weil dank Änderung seiner Konstruktion und der Anwendung des erfindungsgemässen Verfahrens und der erfindungsgemässen Einrichtung zur Informationslöschung eine Aufzeichnungsschicht hoher Güte regeneriert wird.

Kurze Beschreibung der Zeichnungen

Die Erfindung soll durch die nachstehende Beschreibung von Ausführungsbeispielen anhand der beiliegenden Zeichnungen näher erläutert werden. Es zeigen:

Fig. 1 einen erfindungsgemässen optischen Informationsträger;

Fig. 2 einen optischen Speicher mit einem erfindungsgemässen zylindrischen optischen Informationsträger;

Fig. 3 einen erfindungsgemässen optischen Speicher mit koaxial angeordneten Elektroden;

Fig. 4 einen erfindungsgemässen optischen Speicher mit einer im Hohlraum des optischen Informationsträgers angeordneten Elektrode;

Fig. 5 eine weitere Ausführungsform des erfindungsgemässen optischen Speichers.

-6-

Bevorzugte Ausführungsform der Erfindung

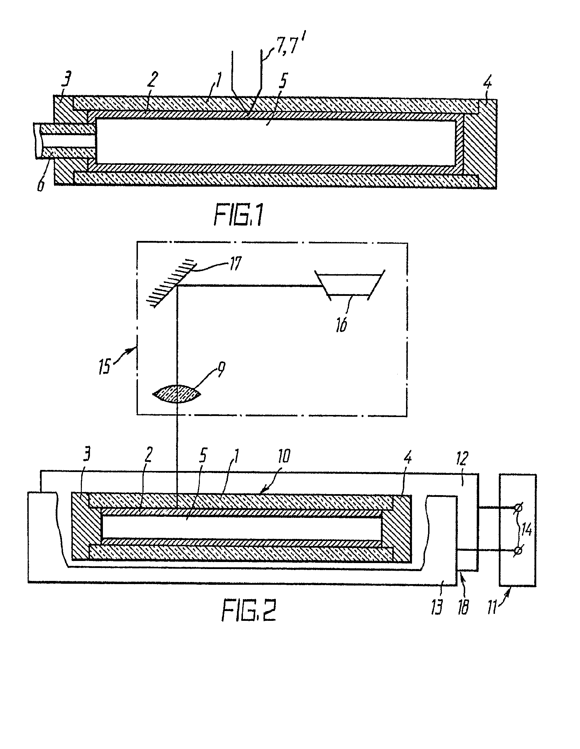

Der optische Informationsträger enthält einen Hohlzylinder 1 (Fig. 1) aus Glas oder einem anderen gegenüber der Laserstrahlung durchlässigen Material. Auf die Innenfläche des Zylinders 1 ist eine Aufzeichnungsschicht 2 in Form einer 500 bis 200 nm starken Dünnschicht aufge-bracht.

Die Aufzeichnungsschicht 2 ist im bekannten Verfahren hergestellt, und als deren Material kommen Te, In, Ag, Au, Tl, Ge oder Cd bzw. Verbindungen oder Legierungen von Te, Bi, Cd, Tl mit S, Se oder Sb zum Einsatz.

An den Stirnenden des Zylinders 1 sind Hülsen 3 und 4 angeordnet, die einen geschlossenen hermetisch abgedichteten Hohlraum 5 bilden, innerhalb dessen eine auf solche Weise gegen die Umgebung isolierte Aufzeichnungsschicht 2 untergebracht wird.

In einer Hülse 3 ist ein Rohr 6 zur Luftabsaugung aus dem Hohlraum 5 angeordnet.

Der hermetisch abgedichtete Hohlraum 5 ist mit einem gegen das Material inerten Gas, besipielsweise mit Argon oder Stickstoff, unter einem Druck von z.B. 0,001 bis 1,0 mm Hg bzw. 0,1 bis 100 Pa gefüllt. Dazu dient das gleiche Rohr 6.

Gegenüber dem Träger erweist sich als Überdruck so der Aussen- wie auch der Innendruck. Am zweckmässigsten ist es daher, den Träger auf der Basis eines Zylinders auszuführen, weil derartiger Träger bei minimaler Wanddicke dem Überdruck in beliebiger Richtung am besten standhält. Dies erhöht die mechanische Festigkeit des Informationsträgers beträchtlich.

Der Informationsträger zur optischen Aufzeichnung arbeitet wie folgt.

Im Schreibbetrieb fällt auf die Aufzeichnungsschicht des Informationsträgers ein durch ein Objektiv fokussiertes Strahlenbündel 7 ein, das durch das aufzuzeichnende Signal nach der Intensität, Fleckform und -grösse oder in einer anderen bekannten Weise durchmoduliert ist.

Der Informationsträger ist drehbar um seine geometrische Achse 8 ausgeführt, wozu ein beliebiger bekannter, beispielsweise elektrischer (in der Zeichnung nicht angedeuteter), Antrieb verwendet wird.

Der Laserstrahl 7 bewirkt eine entsprechende Änderung des Oberflächenreliefs der Aufzeichnungsschicht 2, d.h. führt eine Aufzeichnung durch. Hierbei wird für die Informationsaufzeichnung bei sonst gleichen Bedingungen eine um so geringere Stärke der Strahlungswirkung benötigt, einen je grösseren Wert der Oberflächenenergie das Material des Dünnfilmes der Aufzeichnungsschicht 2 besitzt, d.h. je weniger es im schmelzflüssigen Zustand die Wände des Zylinders 1 benetzt.

Im Lesebetrieb fällt auf die Aufzeichnungsschicht 2 des sich um seine Achse 8 drehenden Informationsträgers ein durch ein Objektiv 9 fokussiertes unmodulliertes Laserstrahlenbündel 7 mit einer gegenüber dem Schreibbetrieb verringerten Intensität ein. Dieses Bündel 7 wird bei der Rückstrahlung von der Aufzeichnungsschicht 2 durch eine auf dieser enthaltene Aufzeichnung intensitätsmoduliert, während in einem (auf der Zeichnung der Einfachheit halber nicht angedeuteten) Fotoempfänger die im Rückstrahl enthaltene Information in ein elektrisches Signal verwandelt wird.

Der optische Speicher enthält einen hohlen optischen Informationsträger 10 (Fig. 2) und eine Einheit 11 zur Informationslöschung, die ihrerseits eine Erregerschaltung für eine Hochfrequenzentladung aufweist, die in Form eines Hochfrequenzgenerators beliebigen bekannten Typs mit an Klemmen 14 des Generators elektrisch gekoppelten Elektroden 12 und 13 ausgeführt ist.

Der Träger 10 ist zwischen den Elektroden 12 und 13 in der Weise angeordnet, dass in dessen hermetisch abgeschlossenem Hohlraum 5 eine Hochfrequenzentladung entsteht.

Der Strahlungsfluss wird auf den Träger von einer Einheit 15 zur Informationsaufzeichnung und -ablesung gegeben, die einen Laser 16 sowie einen Spiegel 17 und ein Objektiv 9 enthält, die mit diesem optisch verbunden sind.

Der vorliegende Speicher sorgt für eine Löschung der auf dem Informationsträger 1 aufgezeichneten Information, weshalb er in ein elektrisches Feld gebracht wird, das zwischen den Elektroden 12 und 13 durch den Hochfrequenzgenerator erzeugt wird und für eine Hochfrequenzentladung im Hohlraum 5 des Trägers 10 sorgt. Hierbei wird die Oberfläche der Aufzeichnungsschicht 2 infolge einer Ionenzerstäubung und einer Rückdiffusion der zerstäubten Atome des Materials der Aufzeichnungsschicht 2 an den Wänden des hermetisch abgeschlossenen Hohlraumes 5 sowie infolge einer Erhitzung der Schicht 2 durch deren Beschuss mit geladenen Teilchen geebnet, d.h. es erfolgt eine Löschung der auf der Schicht 2 aufgezeichneten Information, ohne dass die Schicht 2 selbst vernichtet oder erheblich zerstört wird. Bei der Rotation des Trägers 10 um seine Achse 8 wird in dieser Weise die Oberfläche der gesamten auf den Zylinder 1 aufgebrachten Aufzeichnungsschicht 2 geebnet.

Die Elektroden 12 und 13 sind in Plattenform ausgeführt, wobei sich der Hohlraum 5 des Trägers 10 als vollständig erfasst durch die Elektroden 12 und 13 erweist, wodurch die Informationslöschung mit einemmal auf dem gesamten Träger 10 verwirklicht wird. Derartige Ausführung des Speichers hat eine einfache Konstruktion geringer Abmessungen.

Die Drehachse 8 des Trägers 10 verläuft parallel zu den Elektroden 12 und 13. Der Träger 10 kann aber derart angeordnet werden, dass dessen Drehachse 8 geneigt sein wird. Die Elektroden 12 und 13 werden entweder parallel oder unter einem Winkel zueinander und zum Träger 10 angeordnet, wobei der Träger 10 zwischen den Elektroden 12 und 13 zu liegen kommt, so dass die Aufzeichnungsschicht 2 im Entladungsraum 18 untergebracht wird, weshalb die Länge der Elektroden 12, 13 die der Schicht 2 überragt.

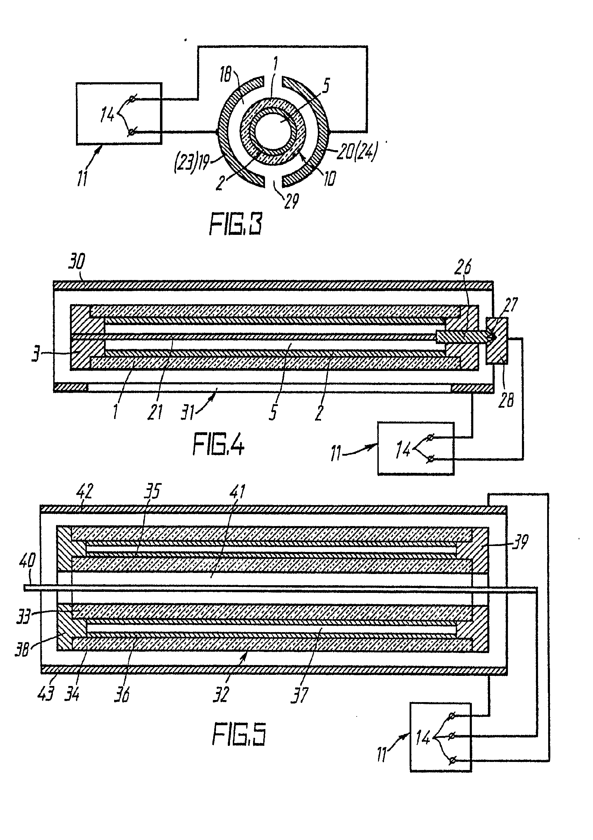

Am geeignetsten und energetisch vorteilhaftesten erwies es sich, die Elektroden 19 (Fig. 3) und 20 in Form zweier Halbzylinder gleichen Radius auszuführen, der den Aussenradius des Trägers 10 übertrifft. Die Elektroden 19 und 20 sind in der Weise angeordnet, dass sie einen Teil der zum Träger 10 koaxialen Oberfläche bilden.

Die Anzahl der den Informationsträger 10 umfassenden Elektroden kann zwei übersteigen und hängt von der gewählten Konfiguration des benutzten elektrischen Feldes ab.

In Fig. 4 ist eine andere Variante der Elektrodenanordnung dargestellt, in der eine Elektrode 21 innerhalb eines hermetisch abgeschlossenen Hohlraumes 22 und zwei andere Elektroden 23 und 24 ausserhalb eines Trägers 25 liegen, wie dies in Fig. 3 gezeigt ist. Die Elektrode 21 hat einen elektrischen Anschluss 26 mit einer Nadel 27, die mit einer Stütze 28 kontaktiert und über die Stütze 28 mit der Einheit 11 elektrisch verbunden ist.

Zwischen den Elektroden 19 und 20 gibt es einen Spalt 20, der zur Drehachse des Trägers 10 parallel ist und durch den auf die Aufzeichnungsschicht 2 ein Strahlungsfluss vom Generator 16 (Fig. 2) auftrifft, während in Fig. 4 der Strahlungsfluss vom Generator 16 zum Träger 25 zwischen den Elektroden 19, 20 hindurchkommt. Wenn aber der in Fig. 4 aufgeführte Speicher zwei Elektroden 21 und 30 aufweist, deren letztere den Träger 25 umgibt, so ist in der Elektrode 30 ein Spalt 31 ausgeführt, damit der Strahlungsfluss vom Generator 16 auf die Aufzeichnungsschicht 2 auftrifft.

Es wird nunmehr eine weitere Ausführungsform des Speichers betrachtet, in der ein zylinderischer optischer Informationsträger 32 zum Einsatz gelangt, der zwei koaxiale Hohlzylinder 33 und 34 enthält. Die Aufzeichnungsschicht 35 ist auf die Aussenfläche des Innenzylinders 33 aufgebracht, und die Aufzeichnungsschicht 36 ist auf die Innenfläche des Zylinders 34 aufgetragen und der Schicht 35 zugekehrt. Der Hohlraum 37 zwischen den Zylindern 33 und 34 ist durch Hülsen 38 und 39 hermetisiert und mit einem gegen die Materialien des Trägers 32 inerten Gas gefüllt.

Eine Elektrode 40 liegt im Hohlraum 41 des Innenzylinders 33 und die übrigen Elektroden 42 und 43 sind ausserhalb des Trägers 32 angeordnet.

Die Elektroden 19, 20, 23, 24, 30 und 40 bis 43 weisen eine Länge auf, die die Länge der Aufzeichnungsschicht 2 oder 35, 36 übersteigt.

Der Speicher arbeitet wie folgt.

Im Schreibbetrieb wird auf den Informationsträger 1 (Fig. 1, 2) ein gebündelter, durch ein der aufzuzeichnenden Information entsprechendes Signal intensitätsmodulierter Strahlungsfluss vom Generator 16 gerichtet. In der Aufzeichnungsschicht 2 des um die Achse 8 rotierenden Trägers 2 bilden sich Vertiefungen im wesentlichen durch Verdrängung des Materials der Schicht 2 aus dem Bestrahlungsbereich unter Ausbildung von Erhebungen um die Vertierungen herum. Auf solche Weise entstehen Abschnitte mit einem veränderten Reflexionsgrad, die die eingespeicherte Information aufbewahren.

Ist die aufgespeicherte Information zu löschen, wird der Informationsträger 1 der Einwirkung eines elektrischen Hochfrequenzfeldes ausgesetzt, das zwischen den Elektroden 12 und 13 (23, 24, 30, 40 bis 43) durch eine Erregerschaltung aufgebaut wird. Hierbei finden im Hohlraum 5 des Trägers eine Hochfrequenzentladung und also auch eine Ionenzerstäubung und eine Rückdiffusion der zerstäubten Atome in der Aufzeichnungsschicht 2 statt. Diese Vorgänge führen zu einer Zerstörung der die aufgezeichnete Information aufbewahrenden Abschnitte und zu deren anschliessender Wiederherstellung unter Ausbildung einer gleichmässigen Schicht 2 ohne Vertiefungen und Erhebungen. Dazu tragen auch die Rotation des Trägers um die Achse 8 und die Entwicklung einer grossen Wärmemenge im Bereich der vorhandenen Aufzeichnungsschicht 2 bei.

Nach Ende des Löschbetriebes wird die Aufzeichnungsschicht 2 vollständig regeneriert, und der Träger wird

-11-

erneut geeignet für die Informationsaufzeichnung.

Die in Fig.3 bis 6 aufgeführten Speicher arbeiten im Schreib- und Lesebetrieb analog. Das durch die Elektroden 19 (Fig. 3) und 20 erzeugte elektrische Feld ist ungleichmässig, aber eine hohe Qualität der Löschung wird in dieser Ausführungsform der Erfindung durch Rotation des Trägers 10 erreicht.

Die erhaltene vorzüglich regenerierte Aufzeichnungsschicht 2 (Fig. 1 bis 4), 35, 36 (Fig. 6) erhöht die Zuverlässigkeit und die Zykluszahl bei der Informationsüberschreibung bis auf mehrere Millionen, d.h., dass ihre Betriebsdauer praktisch unbegrenzt ist.

Industrielle Anwendbarkeit

Die Erfindung kann in der Rechentechnik, in Bild- und Schallaufzeichnungsgeräten und in Systemen zur Informationsspeicherung und -verarbeitung, insbesondere in externen Speichern von EDVA, angewendet werden.

-12-

PATENTANSPRÜCHE

1. Optischer Informationsträger, der einen Hohlzylinder (1), eine mit dem Hohlzylinder (1) in Verbindung stehende und zur Aufzeichnung von Informationen vorgesehene Aufzeichnungsschicht (2) und zwei Hülsen (3, 4) enthält, die je stirnseitig des Hohlzylinders (1) angeordnet sind und einen geschlossenen Hohlraum (5) in diesem bilden, dadurch g e k e n n z e i c h n e t , dass der geschlossene Hohlraum (5) hermetisch abgedichtet ausgeführt und die innerhalb des geschlossenen hermetisch abgedichteten Hohlraumes (5) liegende Aufzeichnungsschicht (2) von der Umgebung isoliert ist.

2. Optischer Informationsträger nach Anspruch 1, dadurch g e k e n n z e i c h n e t , dass der geschlossene hermetisch abgedichtete Hohlraum (5) mit einem Gas gefüllt ist, das gegenüber den Materialien der Aufzeichnungsschicht (2) und des Hohlzylinders (5) inert ist.

3. Optischer Informationsträger nach Anspruch 1 oder 2, dadurch g e k e n n z e i c h n e t , dass er einen innerhalb des ersten Hohlzylinders (33) koaxial zu diesem angeordneten zweiten Hohlzylinder (34) aufweist, der eine auf dessen Aussenfläche liegende und der Aufzeichnungsschicht (35) des ersten Zylinders (33) zugewandte Aufzeichnungsschicht (36) besitzt, während die Hülsen (3, 4) ringförmig ausgeführt sind und einen geschlossenen hermetisch abgedichteten Hohlraum (37) zwischen den Zylindern (33, 34) bilden.

4. Löschverfahren für eine auf einem optischen Informationsträger aufgezeichnete Information, darin bestehend, dass der optische Informationsträger (10) einer die aufgezeichnete Information löschenden äusseren Einwirkung ausgesetzt wird, dadurch g e k e n n z e i c h n e t , dass als äussere Einwirkung ein elektrisches Feld benutzt wird, das eine Hochfrequenzentladung im geschlossenen hermetisch abgedichteten Hohlraum (5) des optischen Informationsträger (10) ermöglicht.

5. Verfahren nach Anspruch 4, dadurch g e k e n n - z e i c h n e t , dass der optische Informationsträger (10)

0258461

um die eigene Achse (8) rotiert.

6. Optischer Speicher, der einen optischen Informationsträger (10) mit einer Aufzeichnungsschicht (2), eine Einheit (15) zur Informationsaufzeichnung und -ablesung sowie eine Einheit (11) zur Informationslöschung enthält, dadurch g e k e n n z e i c h n e t , dass die Einheit (11) zur Informationslöschung eine über mindestens zwei Elektroden (12, 13) verfügende Erregerschaltung für eine Hochfrequenzentladung aufweist und der optische Informationsträger (10), dessen geschlossener hermetisch abgedichteter Hohlraum (5) mit einem gegenüber den Materialien der Aufzeichnungsschicht (2) und des Hohlzylinders (1) inerten Gas gefüllt ist, zwischen den Elektroden (12, 13) derart angeordnet ist, dass die Hochfrequenzentladung in dessen geschlossenem hermetisch abgedichtetem Hohlraum (5) erregt wird.

7. Optischer Speicher nach Anspruch 6, dadurch g e k e n n z e i c h n e t , dass jede Elektrode (19, 20) der Erregerschaltung für eine Hochfrequenzentladung in der Weise angeordnet ist, dass sie einen Teil der zum zylinderischen optischen Informationsträger (10) koaxialen Oberfläche bildet.

8. Optischer Speicher nach Anspruch 6, dadurch g e k e n n z e i c h n e t , dass eine Elektrode (21) der Erregerschaltung für eine Hochfrequenzentladung innerhalb des geschlossenen hermetisch abgedichteten Hohlraumes (22) des Hohlzylinders (1) und die übrigen Elektroden (23, 24) ausserhalb des Hohlzylinders (1) angeordnet sind.

9. Optischer Speicher nach Anspruch 6, dadurch g e k e n n z e i c h n e t , dass, wenn der optische Informationsträger (32) zwei koaxiale Hohlzylinder (33, 34) mit einem geschlossenen hermetisch abgedichteten Hohlraum (37) zwischen ihnen enthält, eine Elektrode (40) der Erregerschaltung für eine Hochfrequenzentladung im Hohlraum (41) des zweiten Zylinders (34) liegt, während die übrigen Elektroden (42, 43) ausserhalb des ersten Hohlzylinders (33) angeordnet sind.

1/2

0258461

FIG.1

FIG.2

0258461

FIG.3

FIG.4

FIG.5

# INTERNATIONAL SEARCH REPORT

International Application No PCT/SU 87/00021

**I. CLASSIFICATION OF SUBJECT MATTER** (if several classification symbols apply, indicate all) ⁸

According to International Patent Classification (IPC) or to both National Classification and IPC

$IPC^4$ - G11B 7/00, 7/24, G11C13/04

**II. FIELDS SEARCHED**

| Minimum Documentation Searched ⁷ | |
|---|---|
| Classification System | Classification Symbols |
| $IPC^4$ | G 11 B 7/00, 7/24, 11 C 13/04, 11/42 |

Documentation Searched other than Minimum Documentation
to the Extent that such Documents are Included in the Fields Searched ⁸

**III. DOCUMENTS CONSIDERED TO BE RELEVANT⁹**

| Category * | Citation of Document,¹¹ with indication, where appropriate, of the relevant passages ¹² | Relevant to Claim No. ¹³ |
|---|---|---|
| A | GB, A, 1580398, (NORTH AMERICAN PHILIPS CORPORATION), 03 December 1980 (03.12.80) see figures 8,9, the claims(indicated in the description) | 1-9 |
| A | DE, A1, 3203599, (Tokyo Shibaura DENKI K.K.), 12 August 1982 (12.08.82) see figure 1 page 6 | 1-3 |
| A | US, A, 4403318, (Matsushita Electric Industrial Co., Ltd.), 06 September 1983 (06.09.83) see the abstract, figure 2, the claims (indicated in the description) | 1-9 |
| A | US, A, 4519061, (Eastman Kodak Company), 21 May 1985 (21.05.85), see the abstract, figure 1 | 1-9 |
| A | DE, A1, 2721334, (North American Philips Corp), 01 December 1977 (01.12.77), see figure 2,8, 9 | 1-3 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 04 May 1987 (04.05.87) | 20 May 1987 (20.05.87) |
| International Searching Authority | Signature of Authorized Officer |
| ISA/SU | |

Form PCT/ISA/210 (second sheet) (January 1985)